# EUROPEAN PATENT APPLICATION

(11) **EP 2 090 631 A1**
(43) Date of publication of application: **19.08.2009**
(21) Application number: 06811303.4
(22) Date of filing: 05.10.2006
(51) Int. Cl.: C09J 7/02, C09J 201/00

(54) **SUPERSTRONG ADHESIVE TAPE**

(71) Applicant: Musashi Chemicals Industry Co., Ltd., Tokyo 116-0013 (JP)
(72) Inventor: YAMADA, Fumikazu, Tokyo 124-0021 (JP)
(74) Representative: Knoop, Philipp
(86) International application number: PCT/JP2006/319965
(87) International publication number: WO 2008/044266

(57) **Abstract**

A superstrong adhesive tape that in a strongly viscous structure simultaneously having an adhesive function and an adsorptive function, realizes an enhanced bonding strength. There is provided a superstrong adhesive tape comprising plastic foam material (2) having holes (20) opening on its adhesion-object side; and adhesive agent layer (3) fitted on the adhesion-object side of the plastic foam material (2) so as to form depressed portions (30) at positions corresponding to the holes (20). The depressed portions (30) are deformed into a nearly planar configuration in conformity with any compressive deformation of the plastic foam material (2), and exert an adsorptive function in accordance with the elastic recovery of the plastic foam material (2).

## Description

### Technical Field

This invention relates to a super strong adhesive tape stably adhering to a test adhesion surface by providing the tape with a suction bond function.

### Background Art

In a case where a nail or a screw cannot be used for installation of various articles onto a targeted object for installation such as a tile surface, or leaving a trace of a nail or a screw on an article to be installed is not desired, the articles are often fixed with a method using adhesion such as a double-sided adherent tape or fixed with suction bond using a suction cup.

In the case where the installed article is adhered or stuck using the double adherent tape and so forth, the installed article is not firmly stuck on a targeted surface for installation causing the installed article to slip off or strip off a surface of the installed article. The installed article slips off or strips off an adherent surface more evidently corresponding to the weight of the installed article due to an increased load onto the adherent surface along with a time factor after installation.

In the case where various installed articles are installed using a suction bond function such as use of a suction cup, smoothness of a surface for suction bond is highly required causing a number of restrictions for the targeted object. Further, in the case where various articles are installed using the suction bond function, temporal deterioration of a composite material of a tool used for suction bond such as a suction cup likely suffers deterioration of air-tightness of a suction bond surface.

In consideration of the situation descried above, the inventor of the present application proposes a strong adherent structure using a suction bond function of plastic foam (see Patent Document 1). The strong adherent structure possesses a suction bond function for bonding a targeted surface for adhesion with at least openings on a surface of the targeted adhesion surface with an adhesive layer along with elasticity generated by compressive transformation of a plastic foam material in the plastic foam material having the adhesive layer. Due to the joint effect of the adherent function of the adhesive layer and the suction bond function of the openings on the targeted adhesion surface, the strong adherent structure infallibly holds the installed article in a fixed state.
Patent Document 1: Japanese Patent Publication No.: 3016730

As described above, according to the strong adherent structure and the adherent tape having the strong adherent structure, extremely strong adhesion force can be obtained with various advantages such as removal thereof is relatively easy, and no trace is left after removal.

### Disclosure of the Invention

The present invention is proposed in consideration of further improvement of the adherent tape with the strong adherent structure according to Patent Document 1. In other words, the present invention aims to provide a super strong adherent tape capable of possessing adhesion more preferable than the strong adherent structure according to Patent Document 1.

The super strong adhesive tape of the present invention includes a plastic foam material with openings thereon facing the targeted adhesion surface, and an adhesive layer disposed on the targeted adhesion surface of the plastic foam material in such a manner that recesses can be formed in positions corresponding to the openings. Along with the compressive transformation of the plastic foam material, the recesses are transformed, and corresponding to elasticity of the plastic foam material, the suction bond function is achieved.

According to the super strong adherent tape of the present invention, with the suction bond function of the recess in a shape of a suction cup on the adhesive layer, the targeted article can be more firmly adhered according to the adhesion force of the adhesive and the suction force of the recess in the shape of the suction cup.

According to the super strong adherent tape of the present invention, the recess can be of a suction cup. Consequently, in comparison with a mere suction function, when the opening is formed to be in the shape of the suction cup, shear adhesion is further improved.

According to the super strong adherent tape of the present invention, the plastic foam material is disposed on a substrate in a sheet shape. Further, according to the super strong adherent tape of the present invention, the plastic foam material is disposed on both sides of the sheet-shaped substrate in such a manner that targeted adhesion surfaces are disposed outwardly. Consequently, the super strong adherent tape can adhere in a double-sided fashion.

Further, according to the super strong adherent tape of the present invention, a release sheet which has undergone mold release treatment is disposed in the vicinity of the adhesive layer so that the release sheet can be released from the adhesive layer for use. Consequently, the adhesive layer is prevented from temporal deterioration or contamination with dust resulting in prevention of the degradation of the adhesion force of the adhesive layer.

According to the super strong adherent tape of the present invention, with the suction bond function of the recess in the shape of a suction cup on the adhesive layer, the targeted article are more firmly adhered by the adhesion of the adhesive and suction force of the recess than the prior art. Additionally, by forming the opening in the shape of a suction cup, shear adhesion force remarkably higher than the prior art can be achieved.

### Brief Descriptions of the of the Drawings

- Fig. 1: is a schematic cross-sectional view of an adherent tape as an example of the adherent tape of the present invention.
- Fig 2: is an enlarged cross-sectional view of a recess in the adherent tape as an example adherent tape of the present invention.
- Fig. 3: is an enlarged cross-sectional view illustrating the adherent tape as an example adherent tape of the present invention being pressed with a targeted article to be adhered.
- Fig. 4: is a schematic cross-sectional view of a double-sided adherent tape as an example of the adherent tape of the present invention.
- Fig. 5: is a schematic cross-sectional view illustrating one side of the double-sided adherent tape as an example of the adherent tape of the present invention being pressed.

### Best Mode for Carrying out the Invention

### FIRST EMBODIMENT

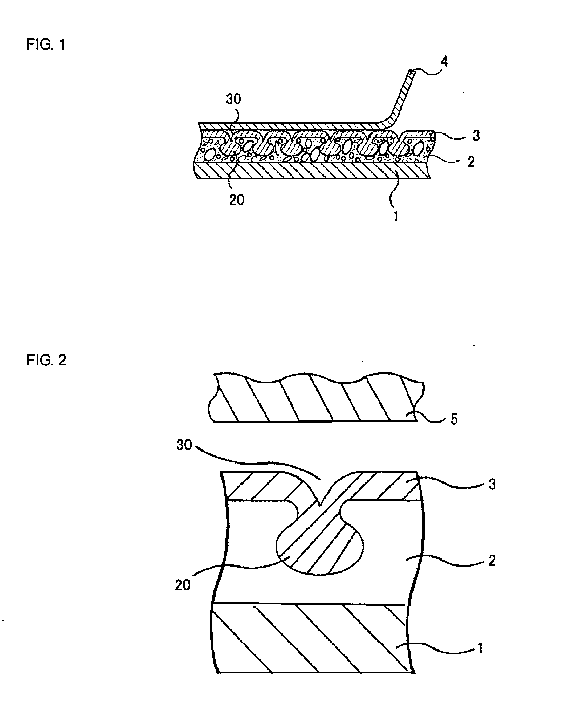

Hereinafter, a super strong adherent tape to which the present invention is applied will be explained in detail with referent to drawings. As shown in the embodiment in Fig. 1, the basic structure of the adherent tape includes a sheet-shaped substrate 1, a plastic foam material 2 having openings that are facing a targeted surface for adhesion and internal spaces, an adhesive layer 3 disposed on the targeted adhesion surface of the plastic foam material 2, and a release sheet 4 being undergone mold release treatment in the vicinity of the adhesive layer 3.

The sheet-shaped substrate 1 is a sheet-shaped member including a strong adherent structure having the plastic foam material 2 and the adhesive layer 3. The material of the sheet-shaped substrate 1 may be arbitrarily modified depending on the application of the adherent tape. For example, the sheet can be made of a polymer such as polyethylene terephthalate. Further, air-tightness of the recess 30 in the adhesive layer 3 described later and the suction bond function can be improved with use of a non-aeration material for the sheet-shaped substrate 1.

The plastic foam material 2 has a porous structure including openings 20 inside and on the surface, and can be compressively transformed corresponding to pressing force against the adherent tape. The plastic foam material 2 is elastically reformed to the pre-compression state when the compressing force is released. For example, the materials such as polyurethane foam, polyethylene foam and polyacrylic foam can be used. In the case of the adhesion tape such as First Embodiment, the plastic foam material is disposed on the sheet-shaped substrate 1 promoting easy application of the strong adhesion structure of the present invention.

As shown in Fig. 2, the plastic foam material 2 has openings 20 on at least the targeted adhesion surface. The openings 20 are formed upon production of the plastic foam material 20 and formed not only on the targeted adhesion surface but also formed inside of the plastic foam material 20.

The plastic foam material 2 may be in any forms of foam bubbles provided that the plastic foam material 2 can transform when the adherent tape is pressed, and be elastically reformed upon release. For example, plastic foam materials of continuous foam, independent foam, and in combination of continuous and independent foams may be arbitrarily used.

The adhesive layer 3 is a layer formed of an adhesive, and at least disposed on the targeted adhesion surface. The recess 30 is formed on the adhesive layer 3 in a corresponding position to the opening 20 formed on the targeted adhesion surface of the plastic foam material 2.

The recess 30 is formed in such a manner that the most part of the opening 20 of the plastic foam 20 is filled with the adhesive. As shown in Fig. 2, the center of the recess 30 and the surrounding area thereof are depressed in such a manner that the center of the recess 30 gradually deepens. The suction cup shaped recess 30 is formed to be in the shape of a suction cup through adjustment of the amount of the adhesive and the thickness of the layer. According to the suction bond function of the recess 30, a targeted article to be adhered is bonded with suction. By forming the recess 30 in the shape of a suction cup, air-tightness between the recess 30 and the targeted article is increased, and suction force is improved. As a consequence, the performance as suction cups is improved and high shear adhesion force is achieved, and hence the targeted adhesion surface is adhered with more strength than the prior arts. In addition, strong shear adhesion force is achieved by pressing the suction cup.

In order for the recess 30 to be in the shape of the suction cup, the opening 20 of the plastic foam material 2 is preferably formed with one air bubble. There may be a case where the opening 20 is formed with a combination of two or more air bubbles, however, an opening 20 with a relatively shallow depression formed with one or two air bubbles is preferable. When the opening is far deep, the depression of the approximate center of the recess 30 deepens upon formation of the adhesive layer 3. Consequently, air-tightness of the recess 30 is impaired as it is difficult for the recess 30 to be an approximate plane when the targeted article is adhered.

Therefore, a foam material with one bubble per recess, namely a foam material with independent foam is preferably used. Alternatively, foam materials with continuous foam or in combination of continuous and independent foams may be preferably used provided that the thickness of the plastic foam material 2 is thinly disposed. For example, the thickness of the plastic foam material 2 is preferably between 0.01 mm and 10 mm, and more preferably between 0.05 mm and 0.5 mm. By reducing the thickness of the plastic foam material 2, the amount of individual bubbles can be increased, and in the case where the opening 20 is formed with a combination of two or more bubbles, the recess 30 can be relatively shallow with the maximum of two bubbles. Consequently, the most part of the opening 20 is easily filled with adhesive.

The adhesive layer 3 may typically be formed with an agent such as a soluble adhesive from a urethane group, a soluble adhesive from an acrylic group, an emulsion adhesive from a vinyl acetate group, or an ultraviolet curable adhesive. For example, the adhesive layer 3 may be formed with a method of the roller coating by applying an adhesive with relatively high viscosity on a surface to be bonded of the plastic foam 2.

Further, by forming the recess 30 of the adhesive layer 3 to be in an anti-airtight structure, a higher suction bond function is obtained. To achieve the above, for example, the targeted adhesion surface of the plastic foam material 2 is thinly coated with a synthetic resin in such a manner that the shape thereof is matched and the form of the recess 30 on the adhesive layer 3 is not disturbed so that the aeration to the recess 30 of the adhesive layer 30 is prevented leading to improvement of the suction function. Alternatively, a similar effect may be obtained by applying a synthetic resin agent to a surface other than the surface for bonding of the plastic foam so that the surface of the plastic foam material other than that for bonding acts as an anti-airtight resin coated surface.

A release sheet 4 is disposed in contact with the adhesive layer 3 until the adherent tape is adhered to the targeted adhesion surface. At least the surface of the release sheet 4 in contact with the adhesive layer 3 has undergone mold release treatment, and is readily released from the adhesive layer 3.

The adherent tape formed as above firmly adhere to a targeted article and a targeted surface for adhesion due to the joint effect of the adherent function of the adhesive and the suction bond function of the recess 30 formed on the adhesive layer 30 on a targeted article 5. In other words, the targeted adhesion surface of the plastic foam material 2 and the rim of the recess 30 on the adhesive layer 3 are adhered to the targeted adhesion surface with the adhesive, and therefore, the air-tightness of the openings for providing the plastic foam material 2 with the suction bond function against a suction surface is achieved.

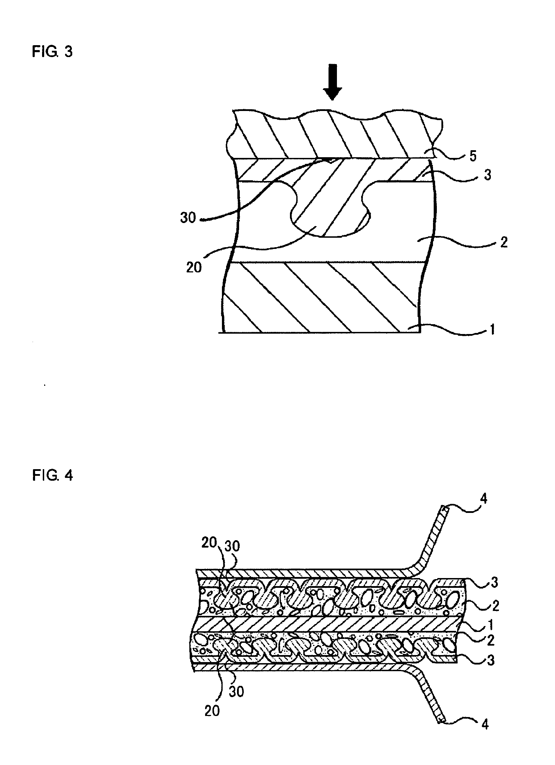

As shown in Figs. 2 and 3, with the adhesive tape structure as above, an adhered article 5 can be firmly adhered with the adhesion and suction bond functions of the adherent tape. Fig. 2 is a diagram showing a state before the targeted article 5 to be adhered to the adherent tape. Fig. 3 is a diagram showing a state that the targeted article 5 is adhered to the adherent tape with pressure.

As shown in Fig. 2, the recess 30 in the shape of a suction cup is formed on the adhesive layer 3 of the adherent tape. Upon adherence of the targeted article 5 to the adherent tape, the release sheet 4 is released from the adherent tape. With the pressure from the targeted article 5 against the exposed adhesive layer 3, the plastic foam material 20 is elastically compressed causing the openings 20 of the plastic foam material 20 to be transformed. The recesses 30 in the shape of suction cups positioned corresponding to the openings 20 are pressed against the targeted article 5.

As shown in Fig. 3, pressing the recess 30 against the targeted article 5 causes the portion of the recess 30 being in contact with the targeted article 5 to be an approximate plane. Consequently, the recess 30 and the targeted article 5 are bonded through releasing the air in the recess 30 existed before the targeted article 5 is pressed causing to generate negative pressure. In other words, the recess 30 is bonded to the targeted article 5. Thus, even when the pressure is released from the adherent tape on the targeted article 5, the adhered article 5 is bonded with the suction bond function of the recess 30. Since the adhesive layer 30 also has the adherent function, the targeted article 5 can be firmly adhered with the adherent tape. In addition, since the recess 30 is in the shape of a suction cup, the shear adhesion force is also high.

With the adherent tape structured as above, an extra firmness for a targeted article to be adhered is achieved due to the suction bond function processed by the opening with post-compression elasticity, and the adherent function of the adhesive layer having the surface with the openings. The shear adhesion force is improved when the recess 30 is provided with the function of the suction cup. Since the recess 30 functions as a suction cup, the targeted article can be easily removed from the adherent tape.

### SECOND EMBODIMENT

The adherent tape described in First Embodiment is not limited to a single-sided adherent tape but may be, for example, a double-sided adherent tape having a plastic foam material both sides of a sheet-shaped substrate to outwardly possess a targeted surface for adhesion.

As shown in Fig. 4, the double-sided adherent tape has the plastic foam material 2, adhesive layers 3 and release sheets 4 on both sides of the sheet-shaped substrate 1. A targeted surface for adhesion of the plastic foam material 2 has openings 20. The adhesive layer 3 has the recesses 30 in the shape of suction cups in positions corresponding to openings 20. Each part of the double-sided adherent tape to be described in Second Embodiment is given an identical reference numeral to First Embodiment and a description thereof is omitted.

With the double-sided adherent tape having the super strong adherent structure is disposed on both sides, two targeted articles 5 are adhered to the adhesive layers 30 of the adherent tape as above with pressure on the targeted articles 5 against the adherent tape. When the targeted articles 5 are applied with pressure, the recesses 30 becomes an approximate plane against the targeted articles 5 generating the suction bond function. As a result of the joint functions of the adhesion and suction bond, the adherent tape is firmly adhered. In addition, since the recess 30 is in the shape of a suction cup, the shear adhesion force is also high, and the targeted articles 5 can be easily removed from the double-sided adherent tape.

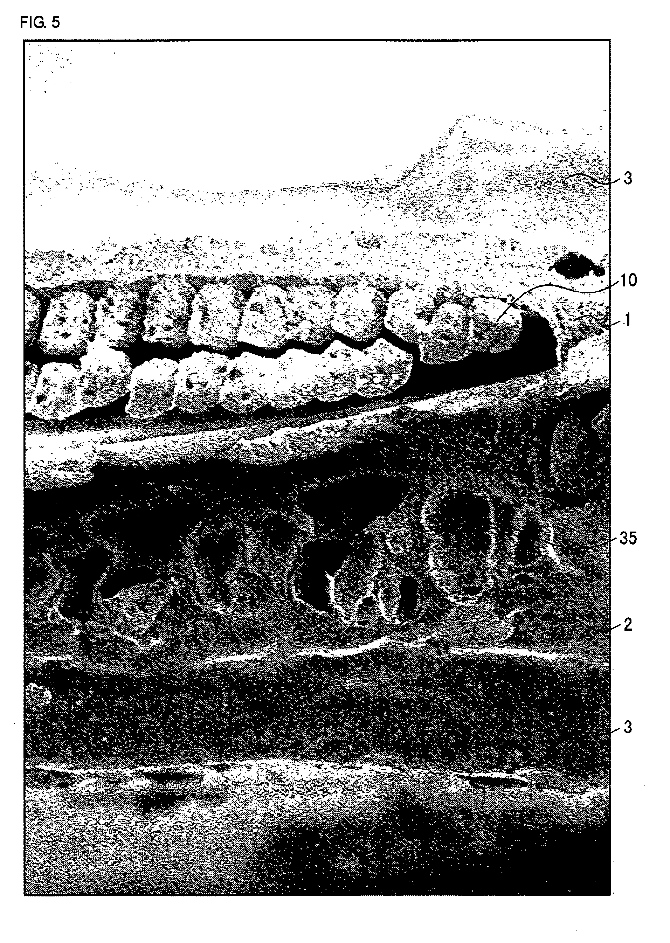

Fig. 5 is a photograph showing the cross-section of the double-sided adherent tape in a state that one side thereof is being compressed. The sheet-shaped substrate 1 includes the plastic foam material 2 and the adhesive layer 3. Fibers 10 structuring the sheet-shaped substrate 1 can be identified in Fig. 5. As seen in the lower middle part of Fig. 5, spaces 35 are formed to face the adhesive layer 3 from the sheet-shaped substrate 1. The upper middle part of the Fig. 5 shows the plastic foam material 2 being compressed. Upon adhesion, by applying pressure to a targeted article to generate a state of the adherent tape as shown in Fig. 5, the suction force is improved and the targeted article can be firmly adhered while achieving strong shear adhesion force.

## Claims

1. A super strong adhesive tape comprising:
a plastic foam material forming openings in such a manner that a targeted surface for adhesion is faced;
an adhesive layer provided on the targeted adhesion surface on the plastic foam material to be adhered so as to form a recess in a position corresponding to the opening; and
a suction bond function corresponding to elasticity of the plastic foam material as a result of transformation of the recess into an approximate plane when compressed transformation is caused to the plastic foam material.

2. The super strong adhesive tape according to claim 1, wherein the recess is in a shape of a suction cup.

3. The super strong adhesive tape according to claim 1, wherein the plastic foam material is disposed on a sheet-shaped substrate.

4. The super strong adhesive tape according to claim3, the plastic foam material is outwardly formed on both sides of the sheet-shaped substrate.

5. The super strong adhesive tape according to claim 1, wherein a release sheet undergone a release treatment is disposed in contact with the adhesive layer, and the release sheet is released from the adhesive layer upon use.
